# EUROPEAN PATENT APPLICATION

(11) **EP 0 650 041 A2**
(43) Date of publication of application: **26.04.1995**
(21) Application number: 94307660.4
(22) Date of filing: 19.10.1994
(51) Int. Cl.: G01L 9/14, G01D 5/14

(54) **Hall effect sensor pressure transducer**

(30) Priority: 20.10.1993 US 139964
(71) Applicant: CTS Corporation, Elkhart Indiana 46514-1899 (US)
(72) Inventor: White, James E., Warsaw, Indiana 46580 (US); McCurley, Jeffrey L., Elkhart, Indiana 46514 (US); Nonnemacher, Ronald C., Elkhart, Indiana 46514 (US)
(74) Representative: Amann, Hannes Gerhart

(57) **Abstract**

A Hall effect differential pressure transducer is disclosed which is capable of withstanding wide temperature extremes and being exposed to highly corrosive fluids. The transducer offers precision while not requiring extraordinary production techniques.

## Description

This invention relates generally to the field of Hall effect device position sensing, and specifically to precision sensing by a Hall effect sensor of pressure differentials in hostile environments such as may be found in industrial or combustion processes.

Pressure transducers may be designed to sense the pressure of a single medium against a standard, such as atmospheric pressure or vacuum, or may alternatively be designed to measure the differential pressure between two fluids. Force sensing devices may also commonly be adapted to measure a single pressure, typically through a pressure-to-force translational member.

Pressure measurement is typically achieved by the use of a planar and yet flexible plate or membrane, i.e. a diaphragm, which is caused to flex in proportion to the amount of force per unit area of the diaphragm, or a pressure differential from one surface of the diaphragm to the opposite surface. Common materials for the diaphragm include alumina or other ceramics, polyimides, polytetrafluoroethylenes or other polymers, micromachined silicon, and metal sheet or foil. Deflection of the diaphragm may be measured with strain sensitive resistors, piezoelectric devices, force sensitive resistors, or by capacitive gap measurements, or other various known position detecting means.

When these sensors are to be subjected to hostile environments such as may be found in industrial processes or in effluent from hydrocarbon combustion processes, the choice of materials from which to form a suitable sensor becomes very restricted. Silicon and most metallic sensors are sensitive to corrosive combustion products. Polymer materials are temperature sensitive and therefore restricted to processes which closely follow typical room temperatures.

Selectively plating or coating easily corroded materials has been considered, though not deemed suitable for applications of wide temperature extremes and strongly corrosive chemical exposure. This is due to the probability of microdefects which are commonly present after typical coating operations and after thermal cycling. These defects act as a starting point for corrosion which very quickly destroys the protective coatings.

The need for long term precision and reliability may further dictate the choice of materials. Polymer materials are not well suited to maintaining a precise dimension when exposed to long term forces. This effect is commonly referred to as material creep or cold flow, and occurs in all known polymeric materials. Plating and ether selective coating, as already mentioned, suffers from eventual loss of integrity. Plating failure results in adverse performance including false and erratic measurements.

In addition to structural materials, an electrical transducer must be selected. Force sensitive resistors which utilise compressive phenomenon are subject to fatigue and material creep similar to other polymer materials. Strain gauge resistors provide small signal outputs for a given change and are subject to large and unpredictable drift with temperature excursion and aging.

Where the application demands high precision and resistance to harsh environments, as is the principal application intended for the transducer of the present invention, the prior art has resorted to alumina or similar ceramic substrates. These materials have been chosen due to their chemically inert compositions and resistance to creep or fatigue. Typically, plates or diaphragms of ceramic are metallised with one of a few very expensive refractory or noble metals in an arrangement which will be used to form a capacitor.

However, as with the other prior art methods, capacitive sensors are very sensitive to manufacturing tolerances. Additionally, relatively complex circuitry and electronics are required to compensate for variations that arise due to the changes in dielectric properties between various fluid compositions and the dielectric constant change induced in all fluids by temperature change.

Industry has long sought a low cost, highly accurate method to measure pressures in corrosive or otherwise harsh environments. The need for such a sensor still exists today.

According to one aspect of the invention, there is provided a Hall effect sensor pressure transducer characterised by the combination of:
a housing including a fluid port for porting a first fluid to be measured into said housing;
a convoluted chamber forming a chamber for containing a second fluid therein;
a chamber formed between said convoluted chamber and said housing, said chamber being in communication with said fluid port for transmitting a pressure of said first fluid to said convoluted chamber; and
a magnetic structure affixed to said convoluted chamber and positioned by said convoluted chamber;
said Hall effect sensor being magnetically coupled to said magnetic structure and adapted to provide an electrical signal indicative of a position of said magnetic structure relative to said Hall effect sensor.

According to a second aspect of the invention, there is provided a magnetic structure for use with a Hall effect sensor, characterised by the combination of:
a first magnet and a first keeper, said first magnet being polarised with a north pole adjacent said first keeper and a south pole at a surface generally opposite said north pole and said first keeper;
a second magnet adjacent said first keeper, said second magnet being polarised with a south pole adjacent said first keeper and a north pole at a surface generally opposite said south pole and said first keeper;
a third magnet adjacent said second keeper, said third magnet being polarised with a south pole adjacent said second keeper and a north pole at a surface generally opposite said south pole and said second keeper;
a fourth magnet and a second keeper, said fourth magnet being polarised with a north pole adjacent said second keeper and a south pole at a surface generally opposite said north pole and said second keeper.

In its first aspect, therefore, the present invention includes a convoluted and therefore resilient bladder or chamber. The chamber may be formed from a bellows or may be a convoluted diaphragm covering a chamber. The convoluted chamber is incorporated into a moulded polymeric housing. The convoluted chamber and the housing coact to accommodate and retain a first fluid under a first pressure. The convoluted chamber forms a sealed area which serves to retain a second fluid under a second pressure, in physical isolation from the first fluid. The pressure differential, which exists across a surface of the convoluted chamber between the two fluids, acts to move that surface with respect to the moulded housing.

Attached to the convoluted chamber is a magnetic circuit, comprised of magnets and keepers, which is moved by the convoluted chamber in relation to pressure differential. Fixedly attached to the moulded housing is a Hall effect device and associated circuitry. The Hall effect device and circuitry are designed to measure the changing position of the magnetic circuit and provide a very precise indication of the position and therefore the pressure differential.

The invention, in its second aspect, provides a particularly useful magnetic structure comprised by the above-mentioned magnets and keepers.

Exemplary embodiments of the invention will now be described with reference to the accompanying drawings, in which:
- Figure 1: illustrates a preferred embodiment of the invention in exploded, projected view;
- Figure 2: illustrates the embodiment of Figure 1 in a fully assembled cross sectional view; and
- Figure 3: illustrates an alternative embodiment of magnetic circuit.

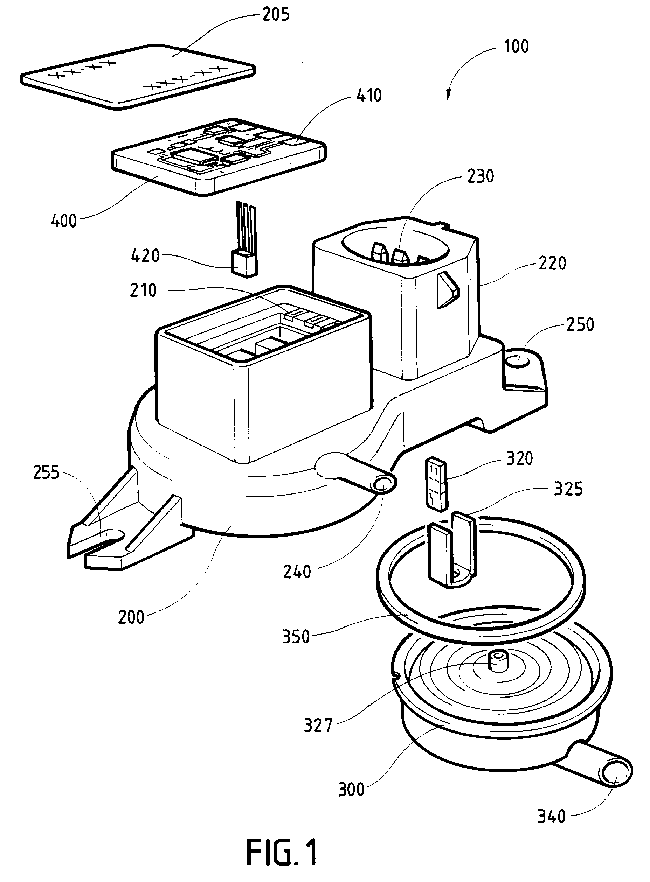

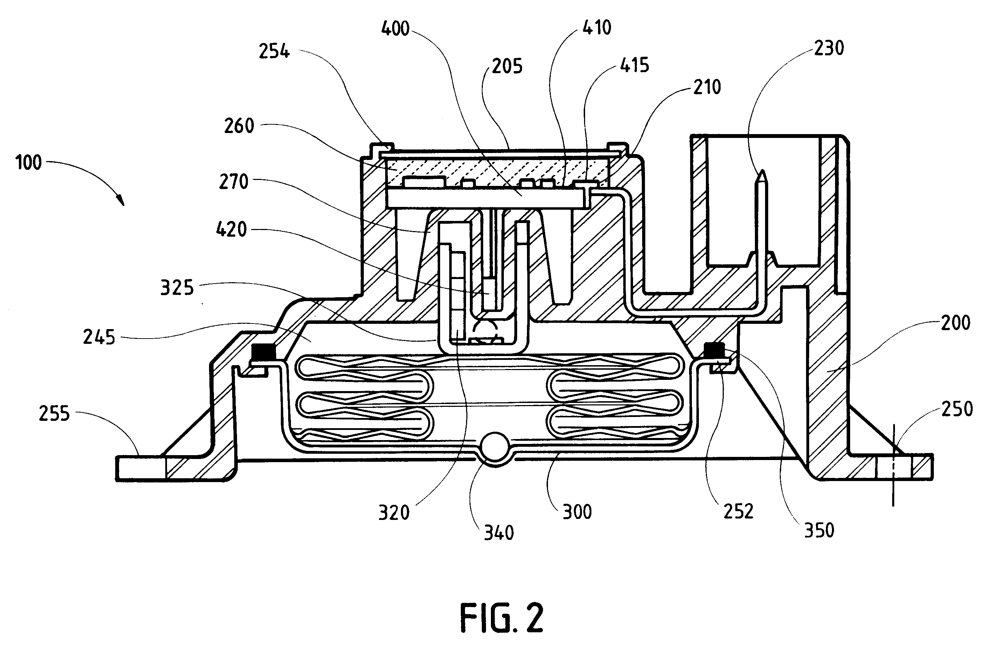

The preferred embodiment of sensor 100 shown in exploded, projected view in Figure 1 and in cross-sectional view in Figure 2 is a differential pressure sensor, i.e. two different fluid mediums are applied to the sensor 100 and sensor 100 will very accurately indicate the difference in pressure between the two fluids. Figure 2 is a cross section taken approximately through a cutting plane between mounting tabs 250 and 255.

The sensor 100 includes a moulded housing 200. While a number of materials may be suited for this purpose, a structurally sound and readily moulded polymeric material is preferred, from the standpoints both of cost and ease of manufacture. One preferred material is a glass filled polyphenylene sulfide. Suitable materials will retain dimensional stability through temperature and pressure excursions without deformation which would otherwise affect the sensitivity of sensor 100. Other materials which would perform the intended function include, for example, non-magnetic materials such as castable alloys of aluminum or zinc, or non-magnetic ceramics. However, caution should be exercised that these materials still offer the degree of corrosion protection required for the intended purpose or that the material be appropriately treated or coated.

Formed into the housing 200 are the two mounting tabs 250 and 255 previously mentioned. Additionally, an electrical connector body 220 is incorporated, including therein terminals 230. Connector body 220 and terminals 230 provide an electrical pathway through which the sensor may be powered and the output monitored by an external device.

Also formed into the housing 200 is a fluid communications port 240, which is in the preferred embodiment in the form of a slender cylindrical tube protruding away from the main body of housing 200. This port 240 may be smooth as illustrated, or may include hose or tubing retention features such as barbs or other arrangements known in the art.

On the surface of the housing 200 not visible in Figure 1 is a small ring shaped protrusion 252 which at the time of moulding extends in a cylindrical fashion roughly coaxially with the holes in mounting tabs 250 and 255. Convoluted chamber 300 is inserted concentrically within the protrusion 252 and sealed with a gasket 350, and the protrusion 252 may then be formed down around the convoluted chamber 300 to the position illustrated in Figure 2. This forming may be effected with heat, pressure, ultrasonic energy or other method or combination known in the art.

The housing 200 further includes a cover 205 and features suited to form a chamber to retain an electronic circuit 400. As shown in Figure 2, the circuit 400 is inserted into the housing 200 and wire bonded by wire 415 from bonding pads 410 on the circuit 400 to bonding pads 210 on the housing within the chamber. The circuit 400 is thereby brought into electrical communication with terminals 230. The circuit 400 is then covered with potting compound 260 in a manner well known in the art, and the cover 205 is placed thereon. A protrusion 254, similar to protrusion 252, may then be formed down to retain the cover 205 in place.

The circuit 400 carries thereon a Hall effect device 420 and all associated electronics. The housing 200 has a Hall effect pocket feature 270 which in the cross sectional view of Figure 2 takes on an "M" shape. The Hall effect pocket 270 serves to keep the Hall effect device isolated from the corrosive fluid medium while still magnetically communicating therewith.

The convoluted chamber 300 is preferably formed of an elastic alloy such as Inconel, Monel, Hastelloy, NiSpan C, 316 stainless or a similar material. Materials such as these are preferred both for superior corrosion resistance and also the non-magnetic or weak magnetic characteristic. Formed integrally with the convoluted chamber 300 is a second fluid communications port 340, comparable to port 240. Also integral with the convoluted chamber 300 is a small stub 327, used to locate a magnetic keeper 325. For the purposes of this disclosure, keepers are defined as armatures that preserve the intensity of magnetisation of a permanent magnet. The keeper 325 acts to guide magnetic field lines from magnet structure 320 through Hall effect device 420. The keeper 325 may be formed from a magnetically susceptible material such as 430 series stainless steel. The magnet structure 320 includes three sectiions and may be made from a single bar of magnetic material. In the preferred embodiment, the magnet structure 320 is formed from samarium-cobalt. The three sections comprise two end sections and a centre section. The two ends are polarised oppositely to one another, and polarised with the poles on the major surfaces. The centre section is left with minimal polarisation. For example, the top portion of structure 320 may be polarised so that the north pole will be facing the Hall effect device 420, while the south pole is facing the keeper 325. The centre portion of the magnet structure 320 will be without a pole, while the bottom portion of the structure 320 will be polarised with the north pole facing the keeper 325 and the south pole facing the Hall effect device 420.

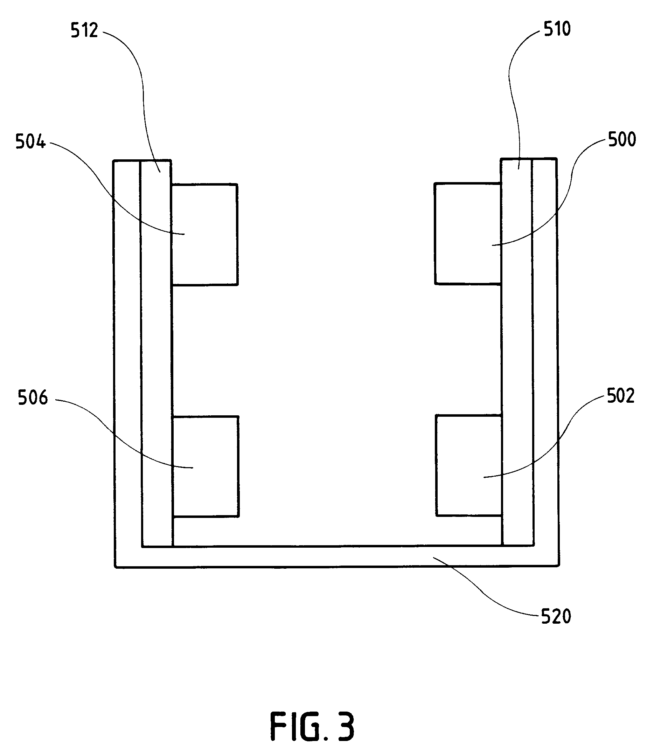

Figure 3 illustrates an alternative magnet structure, wherein two keepers 510 and 512 are incorporated, which may, for example, be of 430 series stainless steel. A magnet support yoke 520 is provided for the purpose of supporting and locating the keepers 510 and 512. Not shown is an attachment hole similar to that illustrated in keeper 325. As with keeper 325, support yoke 520 is adapted for support by and motion from the convoluted chamber 300. The magnets 500 and 504 have opposite poles facing each other. For example, the south pole of the magnet 500 may be facing the north pole of the magnet 504. The magnets 502 and 506 are similarly aligned with respect to each other, but in opposite polarity to the magnets 500 and 504. Using the example from above, if the south pole of the magnet 500 faces the north pole of the magnet 504, then the north pole of the magnet 502 will face the south pole of the magnet 506.

This alternative magnet structure offers several advantages. This structure is less sensitive to movement in the direction of an axis between the magnets 500 and 504. Since the flux lines tend to concentrate from the pole of the magnet 500 facing the magnet 504 directly to the magnet 504, there is little if any change in the strength of the magnetic field sensed by the Hall effect device 420 when the device 420 is moved away from the magnet 500 and closer to the magnet 504. This helps to prevent erroneous readings that might, for example be caused by vibration or other mechanical disturbance.

Additionally, the yoke 520 may be designed to act as one surface of a bearing to assist in retaining precise alignment between the magnets 500 - 506 and the Hall effect device 420. The second bearing surface would preferably be formed during the moulding of the housing 200. While these features are not illustrated, it will be understood that one of ordinary skill in the art could readily design suitable structures to serve this function. Such structures might include, but are not limited to, sliding plates, tracks and grooves, coaxial and concentric cylinders, or other similar axial bearing arrangements.

While the preferred embodiment is a differential transducer, those skilled in the art will understand from a review of this disclosure that a single fluid pressure may also be monitored, particularly where a known fluid pressure is retained within the metal convoluted chamber 300. This fluid pressure may be retained by sealing off the port 340, for example, when the chamber 300 contains a fluid at the desired pressure. Once again, those skilled in the art will readily identify other methods.

The invention as shown and illustrated offers a very reliable and environmentally stable transducer, which offers advantages over the prior art. The use of convoluted chamber 300 makes sensor 100 less sensitive to particulate contamination, for example, than a capacitive sensor. There is less need for pre-filtering the fluids to be measured. Further, the combination of a Hall effect sensor 420 with the convoluted chamber 300 serves to provide precision and reliability through temperature extremes only limited by the Hall effect device. This can readily extend from -55 to +150 degrees Centigrade. Further, the metal bellow system may be reworked at relatively low cost, thereby greatly improving overall manufacturing yields compared to prior art ceramic techniques. Other advantages and features will be apparent to those skilled in the art.

While the foregoing details what is considered to be the preferred embodiment of the invention, no material limitation to the scope of the invention is intended. Further, features and design alternatives that would be obvious to one of ordinary skill in the art are considered to be incorporated herein, and within the scope of the invention as defined in the appended claims.

## Claims

1. A Hall effect sensor pressure transducer characterised by the combination of:
a housing including a fluid port for porting a first fluid to be measured into said housing;
a convoluted chamber forming a chamber for containing a second fluid therein;
a chamber formed between said convoluted chamber and said housing, said chamber being in communication with said fluid port for transmitting a pressure of said first fluid to said convoluted chamber; and
a magnetic structure affixed to said convoluted chamber and positioned by said convoluted chamber;
said Hall effect sensor being magnetically coupled to said magnetic structure and adapted to provide an electrical signal indicative of a position of said magnetic structure relative to said Hall effect sensor.

2. A transducer as claimed in claim 1, characterised in that the magnetic structure comprises:
a first magnet and a first keeper, said first magnet being polarised with a north pole adjacent said first keeper and a south pole at a surface generally opposite said north pole and said first keeper;
a second magnet adjacent said first keeper, said second magnet being polarised with a south pole adjacent said first keeper and a north pole at a surface generally opposite said south pole and said first keeper;
a third magnet adjacent said second keeper, said third magnet being polarised with a south pole adjacent said second keeper and a north pole at a surface generally opposite said south Pole and said second keeper;
a fourth magnet and a second keeper, said fourth magnet being polarised with a north pole adjacent said second keeper and a south pole at a surface generally opposite said north pole and said second keeper.

3. A transducer as claimed in claim 2, characterised in that said generally opposite surface of said first magnet and said generally opposite surface of said third magnet are coaxially aligned.

4. A transducer as claimed in claim 3, characterised in that said generally opposite surface of said second magnet and said generally opposite surface of said fourth magnet are coaxially aligned.

5. A magnetic structure for use with a Hall effect sensor, characterised by the combination of:
a first magnet and a first keeper, said first magnet being polarised with a north pole adjacent said first keeper and a south pole at a surface generally opposite said north pole and said first keeper;
a second magnet adjacent said first keeper, said second magnet being polarised with a south pole adjacent said first keeper and a north pole at a surface generally opposite said south pole and said first keeper;
a third magnet adjacent said second keeper, said third magnet being polarised with a south pole adjacent said second keeper and a north pole at a surface generally opposite said south pole and said second keeper;
a fourth magnet and a second keeper, said fourth magnet being polarised with a north pole adjacent said second keeper and a south pole at a surface generally opposite said north pole and said second keeper.

6. A structure as claimed in claim 5, characterised in that said generally opposite surface of said first magnet and said generally opposite surface of said third magnet are coaxially aligned.

7. A structure as claimed in claim 6, characterised in that said generally opposite surface of said second magnet and said generally opposite surface of said fourth magnet are coaxially aligned.
